# EUROPEAN PATENT APPLICATION

(11) **EP 2 264 973 A2**
(43) Date of publication of application: **22.12.2010**
(21) Application number: 10164812.9
(22) Date of filing: 03.06.2010
(51) Int. Cl.: H04L 29/06

(54) **System and method for secured communications**

(30) Priority: 19.06.2009 US 218583 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A system for secured communications includes a control center, a network transceiver, an authentication server communicatively coupled between the control center and the network transceiver, and an extended trust device communicatively coupled between the authentication server and a client, the extended trusted device being configured to send a device identifier to the authentication server via the network transceiver, the device identifier being based on a combination of a user-configurable parameter and a non-user-configurable parameter of the extended trust device, wherein the authentication server is configured to determine access privilege of a client to the control center by authenticating the device identifier received from extended trust device.

## Description

This application claims priority to U.S. Provisional Application No. 61/218,583 which was filed June 19, 2009 and which is fully incorporated herein by reference.

### BACKGROUND OF THE INVENTION

### Field of the Invention

The present invention is directed toward systems for secured communications over a network, and related methods.

### Description of the Related Art

With homeland-security alert levels fluctuating and malicious hackers developing new attacks daily, controlling access to data assets is one of the biggest challenges for critical infrastructure. Both private enterprise and the United States government have recognized the absolute importance of our critical infrastructure, noting that the consequences of a breach could be disastrous, going far beyond the results of the malicious misuse of data.

Cyber-attacks on critical infrastructures, such as banking and finance, chemical, agricultural and food, communications, dams, energy, emergency services, water, transportation systems, nuclear facilities, etc., could lead to catastrophic consequences. Since the majority of these infrastructures use computers and networks linked for strategic business purposes, they are not easily segmented or separated for protection purposes.

Further, with the use of Ethernet and Internet as common platforms of choice in many new infrastructures, there is an increased possibility for security breaches into such infrastructures. Accordingly, current and future infrastructures may be vulnerable to attack or abuse from unauthorized intruders, e.g., "hackers" or insiders operating outside their authority, gaining access to the system using stolen or "cracked" security information. An example of widely utilized control system is a Supervisory Control And Data Acquisition (SCADA) system, which is a computer system for monitoring and controlling a network. For example, attacks to a traffic control systems may endanger public safety, erode public confidence in the traffic control and enforcement systems, and reduce municipal revenues.

Accordingly, it would be desirable to provide a cost-effective system and method for improving the security of a communication network, such as, for example, database servers, application servers, control systems, power supply systems, and other devices supporting an IP or web based user interface or the like. Further, it would be desirable to provide a technique for controlling access to the network.

### SUMMARY OF THE INVENTION

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects of a secured network are described, the network comprising: a control center; a network transceiver; an authentication server communicatively coupled between the control center and the network transceiver; and an extended trust device communicatively coupled between the authentication server and a client. The extended trust device may be configured to send a device identifier to the authentication server via the network transceiver. The device identifier may be generated using a combination of at least one user-configurable parameter and at least one non-user-configurable parameter of the extended trust device.

The authentication server may be configured to determine access privilege of a client to the control center by authenticating the received device identifier. The extended trust device may be configured to send to the authentication server a client identifier that may comprise one or more of an MAC address, Internet Protocol (IP) address, a serial number of the client, and a predetermined identification number of the client, a user name, a client name, and a user password. Additionally, the authentication server may be configured to determine access privilege of the client to the control center by authenticating the client identifier.

In one embodiment, the non-user-configurable parameter may be based on a carbon degradation characteristic of a computer chip of the device. The non-user-configurable parameter may be based on a silicone degradation characteristic of a computer chip of the device. The user-configurable parameter may comprise one of hard disk volume name, user name, device name, user password, and hard disk initialization date for the device. Additionally, the device identifier may be generated by performing an irreversible transformation on the user-configurable parameter and the at least one non-user-configurable parameter of the device. The device identifier may also be generated by utilizing a cryptographic hash function on the at least one user-configurable parameter and the at least one non-user-configurable parameter of the device.

In accordance with one or more embodiments of the present invention, a mobile network device for secured communication with is provided. The device comprises: a transceiver module configured to communicate with the at least one static node and a field device; at least one processor operatively coupled to the transceiver module; and a memory module operatively coupled to the at least one processor and comprising executable code, when executed, causes the at least one processor to: locate the at least one static node via a public network; send a device identifier to the at least one static node via the transceiver module, the device identifier being based on a combination of at least one user-configurable parameter and at least one non-user-configurable parameter of the device; and in response to the at least one static node authenticating the received device identifier, establish a secure private network (SPN) with the at least one static node.

In accordance with one or more embodiments of the present invention, a method for secured communication with is provided. The method comprising: receiving a device identifier at an authenticating server over a public network from an extended trust device, the device identifier being based on a combination of at least one user-configurable parameter and at least one non-user-configurable parameter of the extended trust device, wherein the authenticating server is communicatively coupled between a secured server and the public network; accessing a database of authorized device identifiers corresponding to known extended trust devices; and in response to the received device identifier matching one of the authorized device identifiers, establishing a secure private network (SPN) between the extended trust device and the secured server.

The method may further include receiving a client identifier from the extended trust device. The client may be directly coupled to the extended trust device. The client identifier may comprise at least one or more items of an IP address of the client, a serial number of the client, a predetermined identification number of the client, a user name, a client name, and a user password. The method may also include determining an access privilege of the client to the secured server by authenticating the client identifier.

In accordance with yet another embodiment of the present invention a computer readable medium is provided. The computer readable medium having stored thereon, computer executable instructions that, if executed by a device, cause the device to perform a method comprising: generating a device identifier based on a combination of at least one user-configurable parameter and at least one non-user-configurable parameter of the device; sending the device identifier to an authenticating server being coupled between a secured server and the device, wherein the secured server is located behind a firewall; and establishing a secure private network (SPN) with the secured server in response to the authenticating server authenticating the received device identifier.

In accordance with yet another embodiment of the present invention a computer readable medium is provided. The computer readable medium having stored thereon, computer executable instructions that, if executed by a device, cause the device to perform a method comprising: receiving an apparatus identifier over a public network from an extended trust apparatus, the apparatus identifier being based on a combination of at least one user-configurable parameter and at least one non-user-configurable parameter of the extended trust device, wherein the device is communicatively coupled between a secured server and the public network, the secured server being located behind a firewall; determining an access privilege of a client to the secured server by authenticating the apparatus identifier received from extended trust apparatus; and granting the client access to the secured server via the extended trust apparatus based on the access privilege.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 provides a block diagram of certain components of an exemplary system for secured communication with a control center.

FIG. 2 illustrates components of an exemplary device identifier.

FIG. 3 illustrates an exemplary embodiment of a network for secure communication between field security devices and an authentication server.

FIGS. 4-5 illustrate exemplary operational flow diagrams of secured communication methods according to one or more embodiments of the present invention.

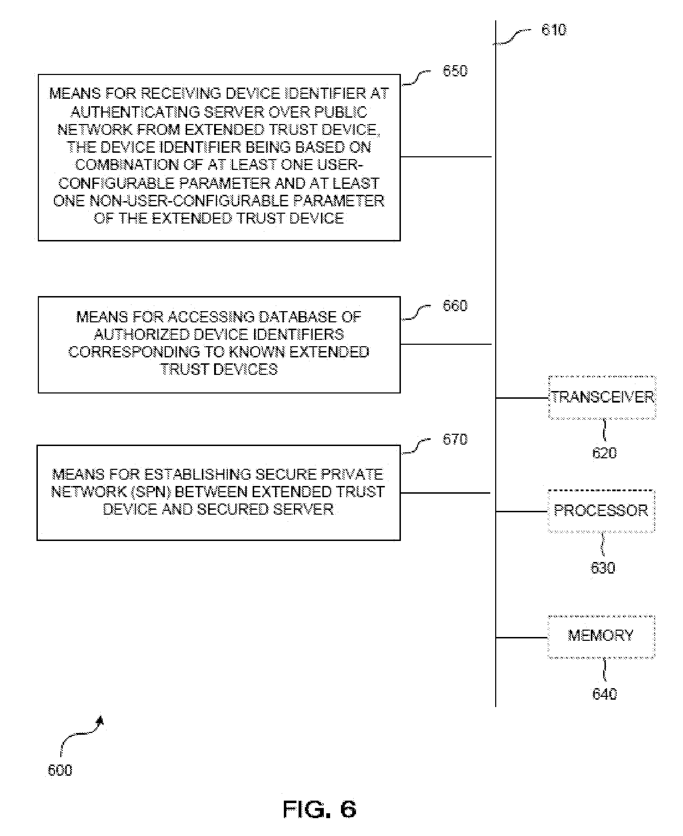

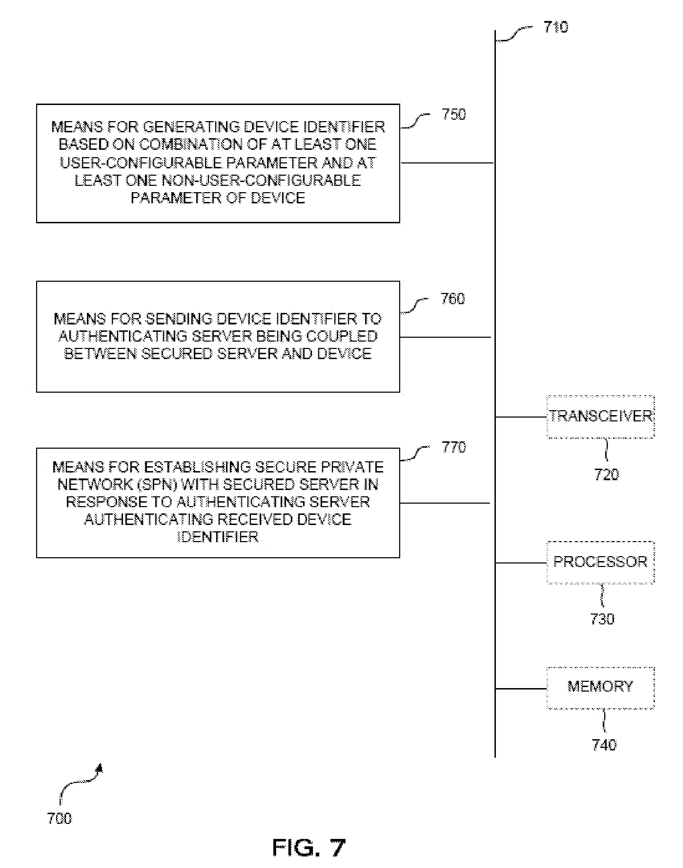

FIGS. 6-7 illustrate exemplary computing systems with which software components can be executed to perform the secured communication method according to one or more embodiments of the present invention.

### DETAILED DESCRIPTION

As mentioned, it would be desirable to have a cost-effective system and method for improving the security of a communication network, such as, for example, database servers, application servers, control systems, power supply systems, and other devices supporting an Internet Protocol (IP) or web based user interface or the like. Further, it would be desirable to provide a technique for controlling access at the outer boundary of the network rather than at the inner core of the network.

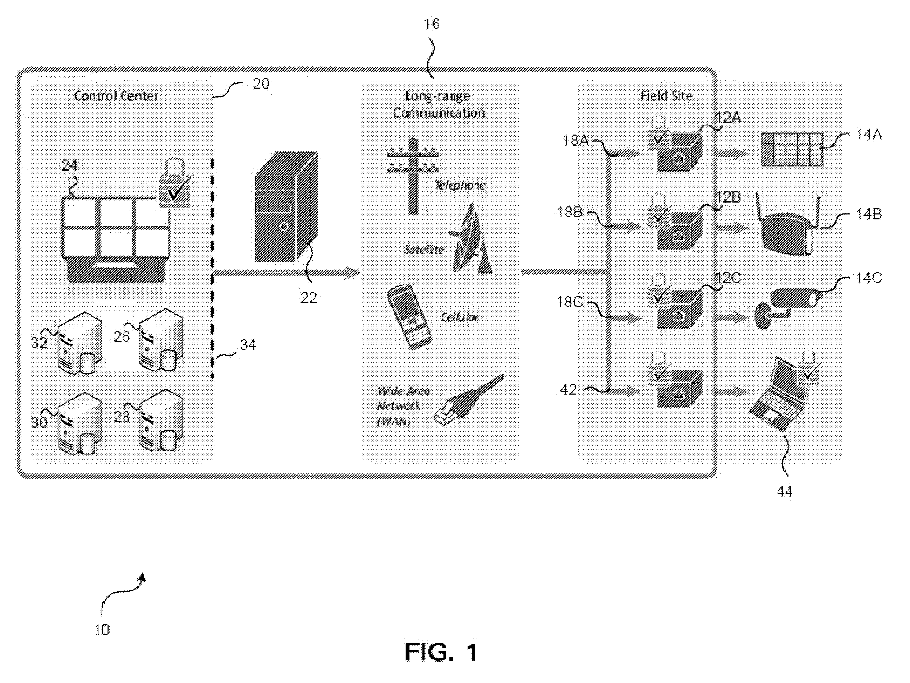

With reference FIG. 1, there is provided an embodiment of a system 10 for securing communication with a control center 20. Control center may be a secured server or a network of computers, which may be located behind a firewall. System 100 includes field security devices/apparatus or extended trust devices 12A, 12B, and 12C and remote clients (e.g., remote clients 14A, 14B, 14C). It will be understood that the system 10 may comprise any number of extended trust devices and remote clients. Remote clients may be control systems (e.g., traffic, water, electricity control systems), surveillance systems, other computer networks, etc.

In the illustrated embodiment, field security devices/apparatuses 12A, 12B, and 12C are operatively coupled to remote clients 14A, 14B, and 14C, respectively. Each field security device 12 may function as a security appliance that creates a secure, virtual-network layer connection between a given remote client 14 (coupled to the given field security device 12) and the control center 20. As will be explained in further detail below, the field security devices 12A, 12B, 12C and authentication server 22 at the control center 20 utilize device recognition technology to establish secure private networks 18A, 18B, and 18C between the control center 20 and the field security devices 12A, 12B, and 12C, respectively.

Each secure private network (SPN) 18 may tunnel across one or more segments of a public network 16. Public network 16 may comprise one or more public portions of the Internet (e.g., 802.3, DSL, cable, Ethernet, etc.). Public networks 16 and 16 may comprise a wireless communication network, such as, for example, CDMA, GSM, etc. Public networks 16 and 16 may comprise a wireless local area network (WLAN), such as, for example, 802.11a, 802.11b, 802.11g, 802.11n, 802.11p, etc. It is noted that public networks 16 and 16 may comprise any communication network, wired or wireless, utilizing any known standards, such as, for example, wide area networks (WANs), campus area networks (CANs), metropolitan area networks (MANs), wireless application protocol (WAP), etc. In the alternative, or in addition, SPN 18 may tunnel across a traffic control network, a portion of which is public.

Located between control center 20 and network 16 is an authentication server 22 that is in operative communication with one or more workstations 26, 28, such as, for example, via a node/switch in between authentication server 22 and a general server 24 (i.e., not an authentication server). Control center 20 may include a firewall 34 between general server 24 and public network 16, and thereby add another layer of protection for communications to and from control center 20. In the alternative, or in addition, control center 20 may comprise a firewall (not shown) between authentication server 22 and public network 16. In the alternative, or in addition, one or more authentication servers and/or workstations operatively coupled to the authentication servers may be located outside of control center 20, such as, for example, at a remote site.

System 10 may include a network device 44, such as, for example, laptop computer, tablet computer, PDA, mobile phone or device, etc. Network device 44 may comprise, for example, a field technician's laptop for troubleshooting remote clients 14A, 14B, and 14C. Device 44 needs to connect to authentication server 22 in order to establish a SPN 42 between a user of network device 44 (e.g., a field engineer) and control center 20. In one embodiment, device 44 bypasses firewall 34 via a VPN soft-server on server 24. Once authentication server 22 authorizes device 44, SPN 42 is established. SPN 42 may essentially function as a tunnel within the VPN soft-server, and therefore may be analogous to a tunnel within a tunnel. In another embodiment (not shown), field security device 12 may acts as a proxy for a network device 44 whose user wishes to access the network, when network device 44 is connected behind field security device 12.

It is noted that SPN 18 has the ability to provide a star topology whereby field security devices 12A, 12B, 12C may communicate with each other, through server 22, thereby providing a way for remote clients 14A, 14B, and 14C to communicate with each other as well. For example, in one embodiment, SPN 18 may be configured to that field security devices 12A, 12B, 12C can only communicate with server 22 (and workstations 26, 28). Such an embodiment would normally be applicable to an Enterprise Server deployment, thereby preventing a control center 20 for one city from affecting critical assets of a control center 20 of another city.

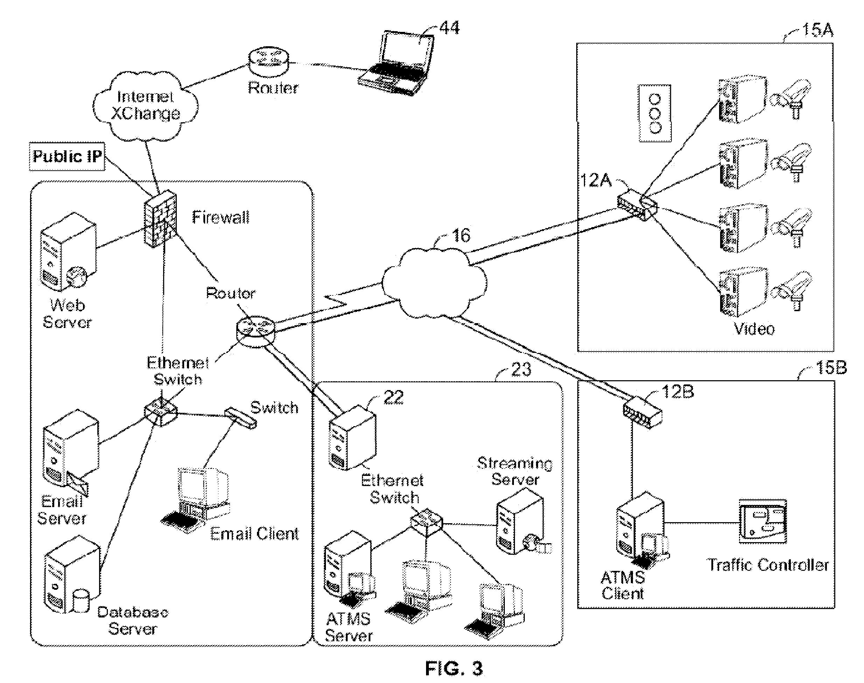

FIG. 3 illustrates an exemplary embodiment of a network for securing communication between field security devices 12A, 12B and authentication server 22. Portions 15A, 15B, and 23 of the shown network represent the secured portions of the network. Portion 15A may include a field security device 12A in operative communication with a traffic signal/light and/or surveillance/video camera(s). Portion 15B may include a field security device 12B in operative communication with an Advanced Traffic Management Systems (ATMS) client, which is in operative communication with a traffic controller. Portion 23 may include an authentication server 22 in operative communications with other servers, such as, for example, an ATMS server or a streaming server, via an Ethernet switch or the like. Network device 44 (e.g., laptop computer) may also be authenticated via server 22 for access to field security devices 12A, 12B.

Device Identifiers:

As noted above, field security devices 12A, 12B, 12C and authentication servers 22, 24, as well as network device 44, may utilize device recognition technology to establish SPNs 18A, 18B, and 18C. For example, each field security device 12 may be adapted to transmit self-identification information to authentication server 22 upon being powered up in the field. The self-identification information or device identifier generally comprises information that is expected to be unique for field security device 12. For example, the device identifier for a given field security device 12 may comprise a serial number and/or location information (e.g., an IP address, geo-location code, etc.).

The device identifier is preferably generated from machine parameters of field security device 12. For example, the machine parameters may be user-configurable parameters such as hard disk volume name, user name, device name, user password, hard disk initialization date, etc. The machine parameters may relate to the platform on which the web browser runs, such as, for example, CPU number, or other unique parameters associated with the firmware in use. The machine parameters may also include non-user-configurable parameters taken from system configuration information, such as amount of memory, type of processor, software or operating system serial number, etc. The device identifier generated from the machine parameters may include the field security device's IP address and/or other geo-location code to add another layer of specificity to field security device's unique identifier. In the alternative, or in addition, the device identifier may comprise a randomly generated and assigned number that is unique for the field security device 12.

In one embodiment, the device identifier for field security device 12 is generated and stored in the field security device's memory before field security device 12 is deployed into the field. In another embodiment, the device identifier, or a portion thereof, is generated after field security device 12 is deployed and/or powered on in the field.

It is noted that an application running on field security device 12 or otherwise having access to the field security device's hardware and file system may generate a unique device identifier using a process that operates on data indicative of the field security device's configuration and hardware. The device identifier may be generated using a combination of user-configurable and non-user-configurable machine parameters as input to a process that results in the device identifier, which may be expressed in digital data as a binary number. Each machine parameter may include data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier that has a very high probability of remaining unchanged during normal operation of the target device. Thus, the resulting device identifier should be highly specific, unique, reproducible and stable as a result of properly selecting the machine parameters.

The application for generating the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured application operating or otherwise having had access to the same field security device for which the device identifier was first generated. Conversely, each identifier, again to a very high degree of certainty, can be successfully reproduced by the suitably configured application operating or otherwise having access to the same field security device on which the identifier was first generated.

The application may operate by performing a system scan to determine a present configuration of the field security device. The application may then select the machine parameters to be used as input for generating the unique device identifier. Selection of parameters may vary depending on the system configuration. Once the parameters are selected, the application may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; BlackBox model; BlackBox serial; BlackBox details; BlackBox damage map; BlackBox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

In one example, the device identifier may also be generated by utilizing machine parameters associated with one or more of the following: machine model, processor model, processor details, processor speed, memory model, memory total, network model of each Ethernet interface, network MAC address of each Ethernet interface, BlackBox Model, BlackBox Serial (e.g., using Dallas Silicone Serial DS-2401 chipset or the like), OS install date, nonce value, and nonce time of day.

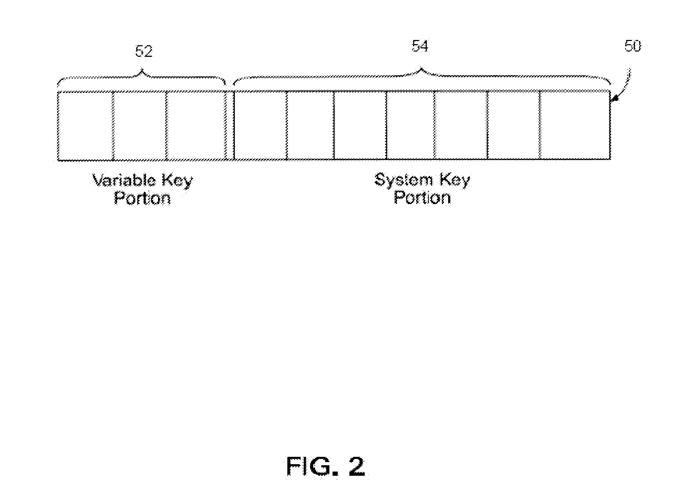

With reference to FIG. 2, in one exemplary embodiment, a device identifier 50 may include two components - namely, a variable key portion 52 and a system key portion 54. The variable key portion 52 may be generated by reference to a variable platform parameter, such as via reference to system time information, although other parameters which are variable may be utilized in other embodiments. The system key portion 54 may include the above described parameters expected to be unique to the field security device 12, such as, for example, hard disk volume name, user name, computer name, user password, hard disk initialization date, or combinations thereof. Portions 52 and/or 54 may be combined with the IP address and/or other platform parameters of the field security device 12. It is noted that device identifiers, or portions thereof, may be encrypted to add an additional layer of specificity and security.

It is noted that device identifiers may be generated for network device 44, authentication server 22, and workstations 26, 28 in the same manner as described above for the field security devices 12. With reference to the exemplary embodiment of FIG. 1, only server 22, workstations 26 and 28, and laptop 44 have been authenticated.

Secure Private Networks (SPNs):

With continued reference to the exemplary embodiment of FIG. 1, it is noted that each field security device 12 is generally adapted to transmit its device identifier back to the control center 20. Upon being powered on and/or connected to remote client 14, field security device 12 preferably accesses an available public network 16, locates or identifies an authentication server 22 at the control center 20, and then establishes a connection with authentication server 22. Upon establishing a connection with authentication server 22, field security device 12 may transmit its device identifier to authentication server 22. The device identifier is preferably encrypted prior to being transmitted by field security device 12 over to public network 16, and then decrypted when received by authentication server 22.

In response to receiving the device identifier from a given field security device 12, authentication server 22 may access a database of authorized device identifiers corresponding to known devices that are authorized to establish a SPN 18 with control center 20. The database may be located at control center 20, such as, for example, on one of servers 22, 24 and/or workstations 26, 28, 30, 32. The database is preferably located on server 22 and/or workstations 26, 28. In the alternative, or in addition, the database may be located on a server or machine that is not located at the control center 20, yet is accessible by server 22.

When the device identifier from field security device 12 matches one of the authorized device identifiers in the database, authentication server 22 and field security device establish a SPN with each other, and thereby create a SPN 18 between control center 20 and the remote client controller 14. In this way, the field security device acts as an extended trust device; extending the secured communication link to any remote client connected to it. SPN 18 generally tunnels across one or more segments of public network 16 to provide a secure channel of communication between the control center 20 and remote client 14.

SPN 18 may be established according to any known technique, such as, for example, via the creation of virtual private networks (VPNs), in which some of the links between nodes are carried by open connections or virtual circuits in a larger network, such as, for example, public portions of the Internet. Link-layer protocols of the virtual network may be tunneled through the larger network.

Field security devices/extended trust devices 12A-C may get serialized labeling at the manufacturing facility, similar to copies of software for authenticity and tracking/history. For plug-and-play in the field, the appliances may first be connected directly to the authentication server, which may be done at a field tech's offices before initial server deployment, and the IP address of the server may be stored. The device fingerprint may also be taken at this time. The deployment address for each appliance may be entered into the server, such as for use in automated geographic mapping of appliance locations. In the alternative, appliances 12 may be configured from the field using an authenticated PC connected to the appliance.

It is noted that one or more SPNs 42 may be established between authentication server 22 and any network devices 44 in the same manner as described above for the field security devices 12. SPN 42 may tunnel across one or more segments of public network 42 to provide a secure channel of communication between control center 20.

In one embodiment, field security device 12 sends its device identifier or machine fingerprint to authentication server 22. When server 22 verifies that the device identifier corresponds to a known or authorized device, the server sends an authentication/verification signal to device 12. Field security device 12 then sends a certificate or public key to server 22 to establish SPN 18. Server 22 may use a private key to check the certificate. Server 22 may then send a server certificate or public key back to security device 12 to establish SPN 18.

In one embodiment, prior to authenticating server 22 establishing SPN 18 with remote device 14, field security device 12 may be required send to the authentication server a client identifier comprising one or more of an IP address of remote client 14, a serial number of client 14, a predetermined identification number of client 14, a user name, a client name, and a user password. In one embodiment, a device identifier generator software (not shown) may be installed onto remote client 14. The identifier software generator may generate a device identifier for client 14 for use as the client identifier. The identifier software generator may be configured to generate a unique device ID in similar ways as described below with respect to field security device 12.

Authentication server 20 may further use the client identifier to determine access privilege of the client to the control center. In one embodiment, at the time when field security device 12 is being registered with authentication server 22, field device 12 may request remote client 14 to send to field device 12 one or more of the client identifier described above. The client identifier is then sent to authentication server 22 for use to register remote client 14 at the same time or immediate after the registration of field security device 12. In this way, if security field device 12 is stolen, authentication server 22 will not grant a new client access to control center 20 if the client identifier does not match with the client identifier that was previous registered with the system.

Field Security Device:

Field security device 12, which may also be referred to as a field appliance or extended trust device, creates a secure, virtual-network layer connection between control center 20 over otherwise public communication networks, including or utilizing the Internet, Ethernet, and wireless networks. Field security device 12 may be operatively coupled to controllers, sensors, detectors, surveillance cameras, uninterruptible power supply (UPS) systems, or other devices supporting an IP or web based user interface.

In accordance with one aspect of the embodiments described herein, there is provided field security device 12 for providing SPN 18 between a field remote client 14 and a control center 20, comprising: a first connector for interfacing with the remote client 14; a communication module; a processor module operatively coupled to the first connector and the communication module; and a memory module operatively coupled to the processor module. In one embodiment, the memory module comprises executable code for the processor module to: (a) access public network 16 or traffic control network via the communication module; (b) locate and/or connect with authentication server 22 of control center 20 via public network 16; and (c) send a device identifier to authentication server 22 via the communication module, the device identifier being based on a combination of both user-configurable and non-user-configurable parameters of the field security device 12; and (d) in response to authentication server 22 authenticating the device identifier from field security device 12, establish SPN 18 between field security device 12 and control center 20, wherein established SPN 18 tunnels across at least one segment of public network 16.

The processor module of field security device 12 may comprise one or more processors, such as, for example, a Motorola MPC8321EEC Microprocessor (333 MHz core processor speed, 32MB flash memory, 64MB DDR2 memory, 32 Mbs VPN throughput) or the like. The first connector of the field security device 12 may comprise a receiving port or the like (e.g., 1WAN, 4WAN, RJ45, 10/100 Mbit/s Ethernet, etc.).

The field security device 12 is preferably adapted for easy plug-and-play field installation, with no field PC required, no device configuration required in the field, and no passwords or keys required to manage. In essence, when field security device 12 is connected or powered up, it preferably "phones home" to an authentication server and establishes its own device-locked point-to-point SPN 18.

The memory module of field security device 12 may further comprise executable code for the processor module to detect network intrusions, determine locations of the intrusions, and notify the control center 20. Field security device 12 may be adapted to continuously or periodically verify its operational status via one or more authentication servers at the control center 20. Field security device 12 is preferably cross-platform compatible with any operating system and field control hardware. Field security device 12 is preferably adapted to be NEMA TS2 compliant.

Field security device 12 may be adapted to connect to any known network routers, switches, and/or firewall security devices. The field security device 12 may be adapted to perform a self-test at startup. Field security device 12 may comprise one or more LED indicators to power and communications link status, or activities status.

Field security device 12 may be field hardened for use inside or outside of the field traffic cabinet. Field security device 12 may be shelf mountable for easy in-cabinet placement with optional DIN rail or sidewall mounting. Field security device 12 may be adapted to defined environmental conditions, such as, for example, -29°F to +165°F (-34°C to +74°C), 0 to 95% relative humidity.

It is noted that security device/appliance 12 may be adapted to access, learn, or otherwise determine the MAC IDs of remote clients 14 or other devices operatively coupled with (e.g., plugged into) device 12. Further, field security device 12 may utilize the learned MAC IDs to establish bi-directional security with such remote clients 14, thereby prohibiting unknown/unauthorized network devices from connecting to the secured network via the device 12. For example, field security device 12 may comprise a memory module storing executable code for a processor module to access and store into the memory module MAC IDs of those remote clients 14 connected to field security device 12. The executable code may further comprise instructions for the processor module to relay the MAC ID or derivations thereof to control center 20 to verify whether the MAC ID or derivation thereof corresponds to a known or authorized device. In response to authentication server 22 of the control center 20 authenticating the MAC ID or derivation thereof, security device 12 may allow the remote client 14 to communicate via a SPN 18 between the control center 20 and the device 12. Otherwise, remote client 14 is blocked or prohibited from communicating with the control center 20 via SPN 18.

Authentication Server:

In accordance with another aspect of the embodiments described herein, there is provided authentication server 22 for providing a SPN 18 between a control center 20 and a field security device 12, field security device 12 being in operative communication with a remote client 14, comprising: a communication module adapted to receive a device identifier over a public network 16 from field security device 12, the device identifier being based on a combination of both user-configurable and non-user-configurable parameters of field security device 12; a processor module operatively coupled to the communication module; and a memory module operatively coupled to the processor module. In one embodiment, the memory module comprises executable code for the processor module to: (a) in response to the communication module receiving the device identifier from field security device 12, access a database of authorized device identifiers corresponding to known field security devices; and (b) in response to the received device identifier matching one of the authorized device identifiers, establish the SPN 18 between the field security device 12 and the control center 20, wherein the established SPN 18 tunnels across at least one segment of the public network 16.

When multiple field security devices 12A, 12B, 12C establish SPNs 18A, 18B, 18C with a given authentication server 22, a point-to-multipoint SPN may be established between control center 20 with each field security devices 12A, 12B, 12C may be located.

Authentication server 22 alone or in conjunction with workstations 26, 28 and/or other components of control center 20, may allocate, manage, and control field security devices 12 and/or PC clients from a single location, such as, for example, control center 20. Control center 20 and components thereof make it possible to gain real-time insight into the status of field security devices 12 and network devices 44 (e.g., a PC client or the like) participating in secured network or system 10.

Further, components of the system 10 described herein make it possible to define and receive instant status reports and updates regarding any changes to the secured network, and to receive alerts regarding any unauthorized access attempts by unauthorized devices. The notifications or alerts at server 22 regarding such unauthorized connection attempts may include information regarding the unauthorized device, the time of the attempted access, the geo-location of the unauthorized device or point of attempted access, etc.

In accordance with another aspect of the embodiments described herein, there is provided an enterprise server that may connect or be in operative communication with a plurality of "child" authentication servers. The child authentication servers may be located at multiple control center 20s. The master or enterprise server may be adapted to allow authorized field technicians to have access to the multiple control center 20s via one enterprise server or service provider. Such technicians may have simultaneous access to the control center 20s via the enterprise server. In the alternative, or in addition, each of the authorized technicians may have the ability to simultaneously access one or more of the field security devices that are in operative communicative communication with the control center 20s via the enterprise server.

In accordance with yet another aspect of the embodiments described herein, there is provided a system wherein authentication server 22 sends its own device identifier or machine fingerprint to field security device 12 for mutual or two-way authentication. In addition to having server 22 verify and authenticate the device 12's identifier, device 12 also verifies and authenticates server 22's identifier, before a SPN 18 is established between device 12 and server 22. Such a system would provide a more robust scheme for securing communication with control center 20. In the alternative, or in addition, authentication server 22 may be adapted to sends its device identifier to a network device 44 (explained in further detail below) for mutual authentication between server 22 and device 44, without which SPN 42 may not be established.

Network Device:

In accordance with another aspect of the embodiments described herein, there is provided a network device 44 (e.g., a laptop computer or PDA) for securely communicating with a control center 20, comprising: a communication module adapted to access a public network; a processor module operatively coupled to the communication module; and a memory module operatively coupled to the processor module. In one embodiment, the memory module comprises executable code for the processor module to: (a) access public network 16 via the communication module; (b) locate and/or connect with an authentication server 22 of the control center 20 via the public network 16; (c) send a device identifier to authentication server 22 via the communication module, device identifier being based on a combination of both user-configurable and non-user-configurable parameters of the network device 44; and (d) in response to authentication server 22 authenticating device identifier from network device 44, establish a SPN 42 between network device 44 and the control center 20, wherein established SPN 42 tunnels across at least one segment of public network 16.

Network device 44, as well as the workstations 26, 28, may comprise client software for device fingerprinting and registration on SPNs or the like. It is noted that network device 44 may comprise a client software that designates network device 44 as a field technician device, as opposed to control center 20 workstation devices 26 and 28, which may have licensing provisions that are different from other network devices. The client software on device 44 may comprise instructions for its host network device to: access a public network; locate an authentication server 22 of control center 20 via public network 16; send a device identifier to authentication server 22, wherein the device identifier is based on a combination of at least one user-configurable parameter and at least one non-user-configurable parameter of the host network device. The client software may further comprise instructions for its host network device to: in response to authentication server 22 authenticating the device identifier, establish a SPN 42 with the control center 20, wherein established SPN 42 tunnels across at least one segment of the public network 16.

Method for Providing a SPN:

In accordance with another aspect of the embodiments described herein, there is provided a method for providing a SPN between a device (e.g., field security device 12 or network device 44) and a control center 20, comprising: accessing a public network (e.g., networks 16 or 16); and locating and/or connecting with an authentication server (e.g., server 22) of control center 20 via the public network. The method may further comprise sending a device identifier for the device to the authentication server via the communication module, the device identifier being based on a combination of both user-configurable and non-user-configurable parameters of the network appliance. The method may further comprise, in response to authentication server authenticating the device identifier, establishing the SPN between control center 20 and the device. The established SPN preferably tunnels across at least one segment of the public network.

Exemplary Methods and Systems for Secured Communications:

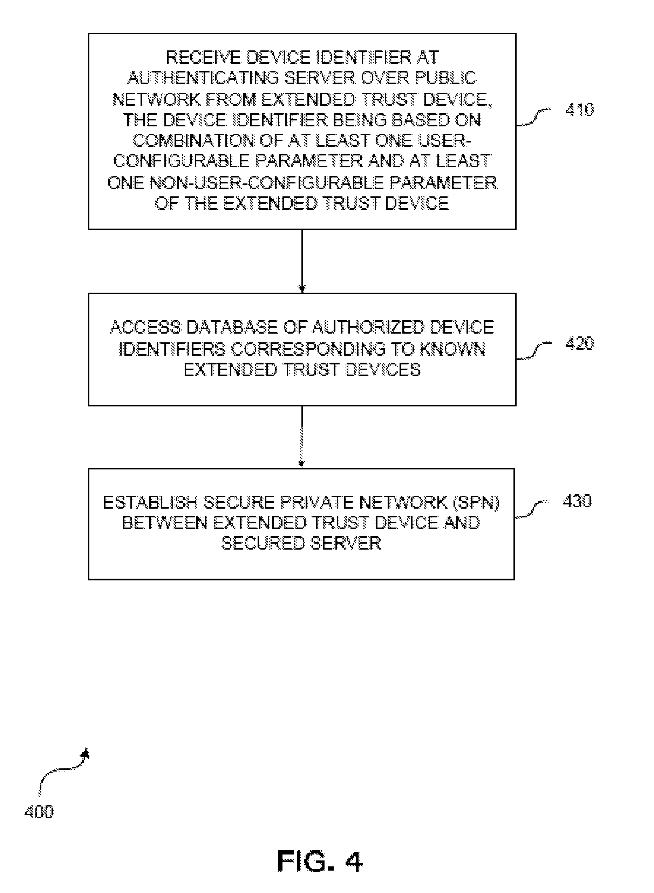

FIG. 4 illustrates an example process flow of method 400 for secured network communication according to one embodiment of the present invention. Referring now to FIG. 4, method 400 starts at step 410 where a device identifier is received at an authenticating server over public network from an extended trust device. The device identifier may be generated using a combination of at least one user-configurable parameter and at least one non-user-configurable parameter of the extended trust device. Alternatively, the device identifier may be generated using one or more of user-configurable and non-user-configurable parameters.

At step 420, the received device identifier is compared with device identifiers in a database of authorized device identifiers corresponding to known extended trust devices. If there is a match, a secure private network connection is established with the field security device at step 430. If there is no match, then the network connection is refused. In one embodiment, the authenticating server also receives a client identifier, such as a MAC address, IP address, serial number, and the like. The authenticating server may additionally use the client identifier to verify the client access privilege and may deny or grant access based on analysis of both the device identifier and the client identifier.

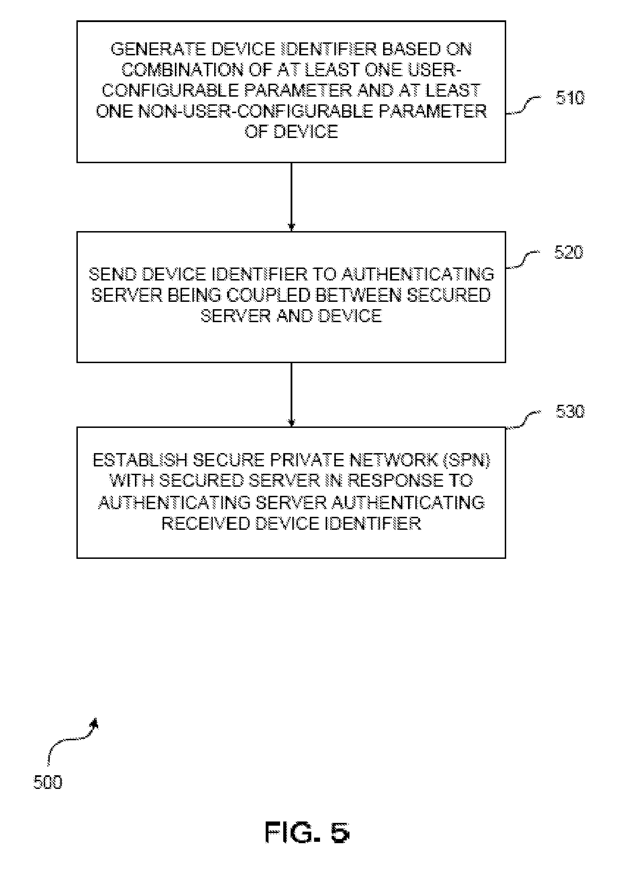

FIG. 5 illustrates an example process flow of method 500 for secured network communication according to one embodiment of the present invention. Referring now to FIG. 5, method 500 starts at step 510 where a device identifier based on combination of at least one user-configurable parameter and at least one non-user-configurable parameter of device is generated. Alternatively, the device identifier may be generated using one or more parameters from one of the user-configurable or non-user-configurable parameters.

At step 520, the device identifier is sent to an authenticating server for verification. In one embodiment, the authenticating server is located between the remote client and the control center. In this way, the remote client will not be able to access the control center without first being authorized by the authenticating server. At step 530, a secure private network connection is established upon receiving the authorization from the authenticating server.

In accordance with one or more embodiments of the present invention, there is provided an exemplary apparatus 600 that may be configured as either a computing device, or as a processor or similar device for use within a computing device. As illustrated, apparatus 600 may include: a means 650 for receiving a device identifier at an authenticating server over a public network from an extended trust device. The device identifier may be generated using a combination of at least one user-configurable parameter and at least one non-user-configurable parameter of the extended trust device. Alternatively, the device identifier may be generated using one or more user-configurable and non-configurable parameters.

Apparatus 600 may also include: a means 660 for accessing a database of authorized device identifiers corresponding to known extended devices to make comparison with the received device identifier; and a means 670 for establishing a secure private network (SPN) between the extended trust device and the secured server (control center) when a match is found in the authorized device identifier database for the received device identifier.

In related aspects, apparatus 600 may include a transceiver module 620 for communicating with means 650-670. A stand alone receiver and/or stand alone transmitter may be used in lieu of or in conjunction with the transceiver 620.

It is noted that apparatus 600 may optionally include a processor module 630 having at least one processor, in the case of apparatus 600 configured as computing device, rather than as a processor. Processor 630, in such case, may be in operative communication with means 650-670, and components thereof, via a bus 610 or similar communication coupling. Processor 630 may effect initiation and scheduling of the processes or functions performed by means 650-670, and components thereof.

In further related aspects, apparatus 600 may optionally include a means for storing information, such as, for example, a memory device/module 640. Computer readable medium or memory device/module 640 may be operatively coupled to the other components of apparatus 600 via bus 610 or the like. The computer readable medium or memory device 740 may be adapted to store computer readable instructions and data for effecting the processes and behavior of means 650-670, and components thereof, or processor 630 (in the case of apparatus 600 configured as a computing device) or the methods disclosed herein.

In yet further related aspects, the memory module 640 may optionally include executable code for the processor module 630 to: (a) receive a device identifier; (b) access database of authorized device identifiers and compare with received identifier; and (c) establish a secure connection between the extended trust device and the secure server once a match is found between the received device identifier and an authorized device identifier in the database. One or more of steps (a)-(c) may be performed by processor module 630 in lieu of or in conjunction with the means 650-670 described above.

In accordance with one or more embodiments of the present invention, there is provided an exemplary apparatus 700 that may be configured as either a computing device, or as a processor or similar device for use within a computing device. As illustrated, apparatus 700 may include: a means 750 for means for generating device identifier based on combination of at least one user-configurable parameter and at least one non-user-configurable parameter of device; and a means 760 for sending device identifier to authenticating server being coupled between secured server and device. In one embodiment, means 760 may also include sending a client identifier, such as a MAC address, an IP address, a serial number of the client, and a predetermined identification number of the client.

Apparatus 700 may also include a means 770 for establishing secure private network (SPN) with secured server in response to the authenticating server verifying the received device identifier and/or the received client identifier.

In related aspects, apparatus 700 may include a transceiver module 720 for communicating with means 750-770. A stand alone receiver and/or stand alone transmitter may be used in lieu of or in conjunction with the transceiver 720.

It is noted that apparatus 700 may optionally include a processor module 730 having at least one processor, in the case of apparatus 700 configured as computing device, rather than as a processor. Processor 730, in such case, may be in operative communication with means 750-770, and components thereof, via a bus 710 or similar communication coupling. Processor 730 may effect initiation and scheduling of the processes or functions performed by means 750-770, and components thereof.

In further related aspects, apparatus 700 may optionally include a means for storing information, such as, for example, a memory device/module 740. Computer readable medium or memory device/module 740 may be operatively coupled to the other components of apparatus 700 via bus 710 or the like. The computer readable medium or memory device 740 may be adapted to store computer readable instructions and data for effecting the processes and behavior of means 750-770, and components thereof, or processor 730 (in the case of apparatus 700 configured as a computing device) or the methods disclosed herein.

In yet further related aspects, the memory module 740 may optionally include executable code for the processor module 730 to: (a) generate a device identifier based on one or more of a user configurable and non-configurable parameters; (b) send the device identifier to the authenticating server; and (c) establishing a secure private network connection in response to the authenticating server authenticating the received device identifier. One or more of steps (a)-(c) may be performed by processor module 730 in lieu of or in conjunction with the means 750-770 described above.

Embedded Systems and Applications:

As noted above, one or more of the techniques and methodologies described herein may be performed by embedded applications, platforms, or systems. The methods described herein may be performed by a general-purpose computer system and/or an embedded application or component of a special-purpose apparatus (e.g., traffic controller, traffic signal, surveillance cameras, sensors, detectors, vehicles, vehicle navigation systems, mobile phones, PDAs, etc.).

In one embodiment, the special-purpose device comprises an embedded platform running an embedded Linux operating system (OS) or the like. For example, the unique device identifier or fingerprint for the special-purpose device may be created by collecting and using one or more of the following information: machine model; processor model; processor details; processor speed; memory model; memory total; network model of each Ethernet interface; network MAC address of each Ethernet interface; BlackBox model (e.g., any Flash device); BlackBox serial (e.g., using Dallas Silicone Serial DS-2401 chipset or the like); OS install date; nonce value; nonce time of day; and any other predefined hardware information stored (optionally encrypted) in EEPROM; any variations/combinations thereof.

While the present invention has been illustrated and described with particularity in terms of preferred embodiments, it should be understood that no limitation of the scope of the invention is intended thereby. Features of any of the foregoing methods and devices may be substituted or added into the others, as will be apparent to those of skill in the art. It should also be understood that variations of the particular embodiments described herein incorporating the principles of the present invention will occur to those of ordinary skill in the art and yet be within the scope of the invention.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A secured communication network comprising:
a control center;
a network transceiver;
an authentication server communicatively coupled between the control center and the network transceiver; and
an extended trust device communicatively coupled between the authentication server and a client, the extended trusted device being configured to send a device identifier to the authentication server via the network transceiver, the device identifier being based on a combination of one or more of a user-configurable parameter and a non-user-configurable parameter of the extended trust device;
wherein the authentication server is configured to determine access privilege of a client to the control center by authenticating the device identifier received from extended trust device.

2. The secured communication network of claim 1, wherein the extended trust device is configured to send to the authentication server a client identifier comprising one or more items selected from the list consisting of MAC address of the client, Internet Protocol address of the client, a serial number of the client, a predetermined identification number of the client, a user name, a client name, and a user password.

3. The secured communication network of claim 2, wherein the authentication server is configured to determine access privilege of the client to the control center by authenticating the client identifier.

4. The secured communication network of claim 1, wherein the at least one non-user-configurable parameter is based on a degradation characteristic of a computer chip of the device.

5. The secured communication network of claim 1, wherein the at least one user-configurable parameter comprises one of hard disk volume name, user name, device name, user password, and hard disk initialization date for the device.

6. The secured communication network of claim 1, wherein the device identifier is generated by utilizing at least one irreversible transformation of the at least one user-configurable parameter and the at least one non-user-configurable parameter of the device.

7. A mobile network device for secured communication with at least one static node, comprising:
a transceiver module configured to communicate with the at least one static node and a field device;
at least one processor operatively coupled to the transceiver module; and
a memory module operatively coupled to the at least one processor and comprising executable code, when executed, causes the at least one processor to:
locate the at least one static node via a public network;
send a device identifier to the at least one static node via the transceiver module, the device identifier being based on a combination of at least one user-configurable parameter and at least one non-user-configurable parameter of the device; and
in response to the at least one static node authenticating the received device identifier, establish a secure private network (SPN) with the at least one static node.

8. The device of claim 7, wherein the memory module further comprising executable code, when executed, causes the at least one processor to send to the static node at least one a MAC address of the client, an Internet Protocol address of the field device, a serial number of the field device, a predetermined identification number of the field device, a user name, a device name, and a user password.

9. The device of claim 7, wherein the at least one non-user-configurable parameter is based on a degradation characteristic of a computer chip of the device.

10. The device of claim 7, wherein the device identifier is generated by utilizing at least one irreversible transformation of the at least one user-configurable parameter and the at least one non-user-configurable parameter of the device.

11. A method, comprising:
receiving a device identifier at an authenticating server over a public network from an extended trust device, the device identifier being based on a combination of at least one user-configurable parameter and at least one non-user-configurable parameter of the extended trust device, the authenticating server being communicatively coupled between a secured server and the public network;
accessing a database of authorized device identifiers corresponding to known extended trust devices; and
in response to the received device identifier matching one of the authorized device identifiers, establishing a secure private network (SPN) between the extended trust device and the secured server.

12. The method of claim 11, further comprising receiving a client identifier from the extended trust device, wherein the client is directly coupled to the extended trust device, and wherein the client identifier comprises at least one or more items selected from the list consisting of a MAC address of the client, an Internet Protocol address of the client, a serial number of the client, a predetermined identification number of the client, a user name, a client name, and a user password.

13. The method of claim 12, further comprising determining access privilege of the client to the secured server by authenticating the client identifier.

14. The method of claim 11, wherein the at least one non-user-configurable parameter is based on a degradation characteristic of a computer chip of the device.

15. The method of claim 11, wherein the device identifier is generated by utilizing at least one irreversible transformation of the at least one user-configurable parameter and the at least one non-user-configurable parameter of the device.
